# EUROPEAN PATENT SPECIFICATION

(11) **EP 2 367 356 B1**
(45) Date of publication and mention of the grant of the patent: **23.05.2012**
(21) Application number: 11002184.7
(22) Date of filing: 16.03.2011
(51) Int. Cl.: H04N 7/24, H04N 5/445, H04L 29/08

(54) **Method for IPTV service discovery and IPTV receiver using the same**
Verfahren zur IPTV-Diensterkennung und IPTV-Receiver, der dieses Verfahren anwendet
Procédé de découverte de service IPTV et récepteur IPTV l'utilisant

(30) Priority: 17.03.2010 US 314988 P
(43) Date of publication of application: 21.09.2011
(73) Proprietor: LG ELECTRONICS INC., Yeongdeungpo-gu Seoul 150-721 (KR)
(72) Inventor: Lee, Joonhui, Seoul 137-724 (KR); Lee, Hyeongjae, Seoul 137-724 (KR); Kim, Kyungho, Seoul 137-724 (KR)
(74) Representative: Katérle, Axel

(56) References cited:
- WO-A1-2008/084965
- WO-A2-2010/024580
- "Digital Video Broadcasting (DVB); Transport of MPEG-2 TS Based DVB Services over IP Based Networks", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V1.4.1, 1 August 2009 (2009-08-01), XP014044460,
- "Digital Video Broadcasting (DVB); Guidelines for the implementation of DVB-IPTV Phase 1 specifications; Part 1: Core IPTV Functions", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V1.3.1, 1 January 2010 (2010-01-01), XP014045043,
- DVB ORGANIZATION: "tm-ipi2878-SDnS-enhancement.doc", DVB, DIGITAL VIDEO BROADCASTING, C/O EBU - 17A ANCIENNE ROUTE - CH-1218 GRAND SACONNEX, GENEVA - SWITZERLAND, 9 April 2010 (2010-04-09), XP017832810,
- DVB ORGANIZATION: "tm-ipi2876-SDS-enhancements.pptx", DVB, DIGITAL VIDEO BROADCASTING, C/O EBU - 17A ANCIENNE ROUTE - CH-1218 GRAND SACONNEX, GENEVA - SWITZERLAND, 19 March 2010 (2010-03-19), XP017832808,

## Description

### BACKGROUND OF THE INVENTION

### Field of the Invention

The present invention relates to a digital broadcasting system, and more particularly, to a method of performing service discovery in an Internet Protocol Television (IPTV) receiver.

### Description of the Related Art

A related are broadcasting receiver receives contents, produced by television stations, through transmission media such as terrestrial waves, cable, satellite broadcasting or the like. However, the development and commercialization of digital broadcasting technologies, substituting existing analogy broadcasting, have allowed consumers to be provided with various types of contents services, such as real-time broadcasting, Contents on Demand (CoD), games, news, and the like, using the Internet network as well as existing radio waves and cable media.

Meanwhile, a digital broadcasting receiver capable of receiving contents services using an Internet network, for example, an Internet Protocol Television (IPTV) can receive various information services, video contents, broadcasting, and the like by using the Internet network and provide the same to consumers. The Internet network can be implemented on various kinds of networks such as an Internet protocol (IP)-based optical cable networks, a coaxial cable network, a Fiber To The Home (FTTH), a telephone network, a radio network and the like.

### SUMMARY OF THE INVENTION

Accordingly, the present invention is directed to a method for Internet Protocol Television (IPTV) service discovery and an IPTV receiver using the same that substantially obviate one or more problems due to limitations and disadvantages of the related art.

An object of the present invention is to provide a method for IPTV service discovery and an IPTV receiver using the same, capable of efficiently performing the discovery and acquisition of service information or electronic program guide (EPG) metadata.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.
To achieve these objects and other advantages and in accordance with the purpose of the invention, as embodied and broadly described herein, there is provided a method for IPTV service discovery, including: collecting service provider discovery information (SP discovery information); and collecting service discovery information by using the collected SP discovery information, wherein the SP discovery information includes target package information regarding a segment obtained by dividing the service discovery information.
In another aspect of the present invention, there is provided an IPTV receiver including: a network interface receiving service provider discovery information (SP discovery information), and receiving service discovery information divided into a plurality of segments by using the received SP discovery information; a data decoder acquiring service information by parsing the received service discovery information; and a control unit filtering the plurality of segments by using target package information included in the SP discovery information.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a schematic view illustrating a configuration for an Internet Protocol Television (IPTV) service;

Fig. 2 is a view for explaining a multicast IPTV service;

Fig. 3 is a view for explaining a unicast IPTV service;

Fig. 4 is a flowchart of a method for IPTV service discovery;

Fig. 5 is a view illustrating one example of a configuration of service provider (SP) discovery information;

Fig. 6 is a view illustrating a configuration of service discovery information divided into a plurality of segments;

Fig. 7 is a view illustrating a configuration of SP discovery information according to a first exemplary embodiment;

Fig. 8 is a view illustrating a configuration of SP discovery information according to a second exemplary embodiment;

Fig. 9 is a view illustrating the configuration of the SP discovery information, depicted in Fig. 8, in the form of an eXtensible Markup Language (XML) schema;

Fig. 10 is a view illustrating one exemplary embodiment of a method of dividing SP information in units of packages;

Fig. 11 is a view illustrating one exemplary embodiment of a configuration of a broadcast discovery record having a plurality of segments respectively corresponding to specific packages;

Fig. 12 is a view illustrating a configuration of SP discovery information according to a third exemplary embodiment;

Fig. 13 is a view illustrating the configuration of the SP discovery information, depicted in Fig. 12, in the form of an XML schema;

Fig. 14 is a view illustrating a configuration of SP discovery information according to a fourth exemplary embodiment;

Fig. 15 is a view illustrating the configuration of the SP discovery information, depicted in Fig. 14, in the form of an XML schema;

Fig. 16 is a view illustrating a configuration of SP discovery information according to a fifth exemplary embodiment;

Figs. 17 to 19 are views illustrating the configuration of the SP discovery information, depicted in Fig. 16, in the form of an XML schema;

Fig. 20 is a flowchart of a method for IPTV service discovery according to a first exemplary embodiment;

Fig. 21 is a flowchart of a method for IPTV service discovery according to a second exemplary embodiment;

Fig. 22 is a flowchart of a method for IPTV service discovery according to a third exemplary embodiment;

Fig. 23 is a flowchart of a method for IPTV service discovery according to a fourth exemplary embodiment;

Fig. 24 is a flowchart of a method for IPTV service discovery according to a fifth exemplary embodiment;

Fig. 25 is a block diagram illustrating a configuration of an IPTV receiver according to a first exemplary embodiment; and

Fig. 26 is a block diagram illustrating a configuration of an IPTV receiver according to a second exemplary embodiment.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

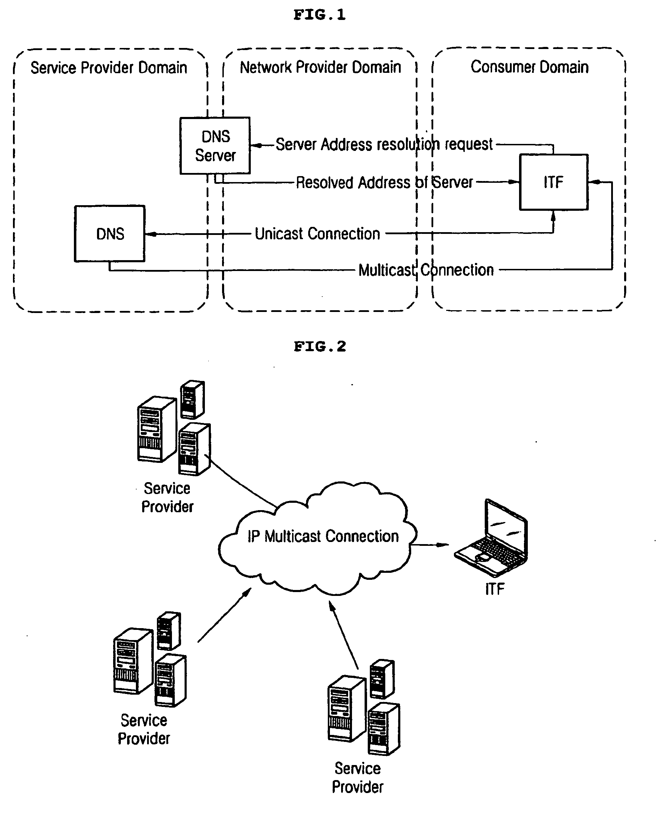

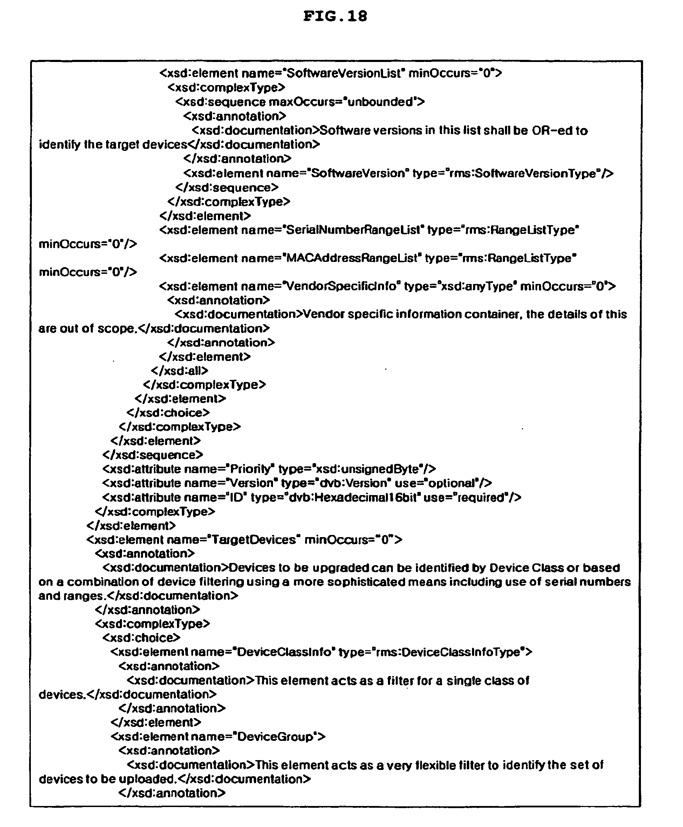

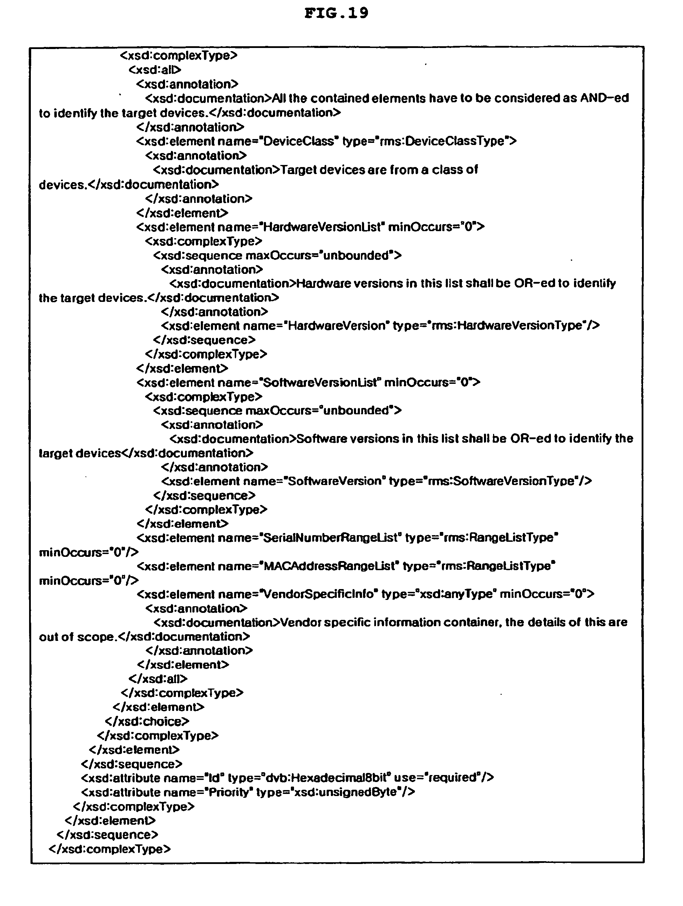

Hereinafter, a method for Internet Protocol Television (IPTV) service discovery and an IPTV receiver using the same, according to exemplary embodiments of the present invention, will be described with reference to Figs. 1 to 26.

Hereinafter, detailed descriptions related to well-known functions or configurations will be ruled out in order not to unnecessarily obscure subject matters of the present invention. Moreover, the terms used henceforth have been defined in consideration of the functions of the present invention, and may be altered according to the intent of a user or operator, or conventional practice. Therefore, the terms should be defined on the basis of the entire content of this specification.

Fig. 1 schematically illustrates a configuration for IPTV services. A system for providing an IPTV service may include a service provider domain, a network provider domain, and a consumer domain.

Referring to Fig. 1, the service provider domain serves to provide consumers (or users) with services. The service provider domain may collect various contents, convert content signals according to an IP environment, and transfer the converted signals to consumers.

Furthermore, a service provider may transmit multimedia data, perform maintenance, repair and management upon a transmission network to enable consumers to reliably receive contents, and provide functions and facilities to enable a content provider to transmit data over the network.

The service provider may be a virtual entity, and the contents provider may also serve as the service provider.

The network provider domain may serve to connect a consumer and a service provider to each other through an IP network. Meanwhile, a transmission system may use a variety of networks such as an access network, a backbone network, a wireless Wide Area Network (WNA), or the like.

The consumer domain is a domain which consumes IPTV services. The consumer domain may serve to reproduce data received using facilities such as xDSL or cable or to perform a specific function in response to a request made by a consumer.

In the consumer domain, an IPTV Terminal Function (ITF) device, depicted in Fig. 1, may be used as a consumer domain apparatus. Besides the ITF device, there may be used a set-top box, a personal computer (PC), a mobile terminal, or a Delivery Network Gateway (DNG) device.

Furthermore, a consumer may build a Home Network End Device (HNED) and thus receive an IPTV service.

An ITF in the consumer domain may transmit a server address resolution request to a Domain Name System (DNS) server, and receive a server address for an IPTV service from the DNS server.

Meanwhile, the server address for an IPTV service may be defined in the form of a Uniform Resource Locator (URL).

By using the server address received from the DNS server, the ITF may access a server in the service provider domain according to a protocol specified in the URL, and receive data for the IPTV service.

Meanwhile, the ITF may access the server by a unicast scheme or a multicast scheme.

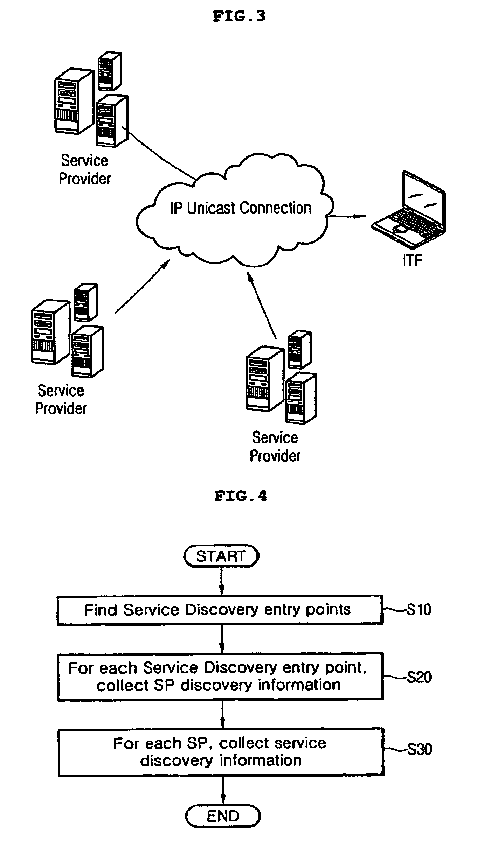

Figs. 2 and 3 illustrate embodiments for IPTV service schemes. Fig. 2 is a conceptual diagram for explaining a multicast IPTV service, and Fig. 3 is a conceptual diagram for explaining a unicast IPTV service.

Referring to Fig. 2, according to the multicast scheme, a plurality of receivers, for example, a plurality of ITFs, are not respectively connected to servers in the service provider domain, but each of the plurality of ITFs creates connections with a plurality of servers therein (i.e., one-to-multiple connections).

That is, the multicast scheme is a method in which data is transmitted to a plurality of ITFs in a specific group. For example, the server can collectively transmit data to a plurality of registered ITFs. An Internet Group Management Protocol (IGMP) protocol may be used for the multicast registration.

The IPTV service adopting the multicast scheme as above can achieve efficient data transmission from a server in the service provider domain to a plurality of ITFs.

Referring to Fig. 3, according to the unicast scheme, one server in the service provider domain is connected to one ITF for data transmission/reception (i.e., one-to-one connection).

For example, in the case of the unicast scheme, when an ITF has requested data from a server, the server may transmit corresponding data to the ITF in response to the request.

In order to receive the IPTV service, the ITF may perform a service provider discovery process to discover available IPTV services on the IP network.

Through the service discovery process, the ITF may collect information regarding IPTV services offered by a plurality of service providers, and provide a service list containing information allowing a consumer to select a service and to access the selected service, by using the collected service information.

For example, the ITF may perform the service discovery to thereby receive Service Discovery & Selection (SD&S) information used to perform discovery and selection upon sorting, on an IP level, a plurality of services, offered from a plurality of service providers. By using the received SD&S information, the ITF may provide an Electronic Program Guide (EPG) having information regarding a plurality of programs.

That is, the SD&S information is information used in a service discovery process in which information regarding a plurality of services offered by a plurality of service providers is received on an IP level to thereby provide a consumer with a service list and enable access thereto, and in a process in which the consumer determines to receive a specific service and selects and obtains the corresponding service.

The SD&S information may include information regarding a service provider, information regarding a service offered from the service provider, a Broadband Content Guide (BCG) discovery record for providing a BCG, and a regionalization discovery record for local services, and firmware announcement information for upgrading or changing HNED firmware.

Meanwhile, the information regarding a service may include broadcast discovery information, CoD discovery information, information regarding services provided from other service providers, package discovery information and the like.

The SD&S information may be sent to the ITF according to the multicast scheme by using a DVB Service Discovery & Selection Transport Protocol (DVBSTP), or according to the unicast scheme by using a Hypertext Transfer Protocol (HTTP).

The SD&S information may be transmitted in the form of an eXtensible Markup Language (XML) record. The ITF may obtain the SD&S information by collecting received DVBSTP packets, processing them into XML records and performing XML parsing thereupon.

Fig. 4 is a flowchart of a method for IPTV service discovery.

Referring to Fig. 4, an ITF finds entry points for service discovery (also referred to as service discovery entry points) in operation S10, and collects Service Provider (SP) discovery information for each of the found entry points in operation S20.

For example, the service discovery entry points refer to servers capable of acquiring the SP discovery information. In operation S10, the ITF may find an address list that can lead to the acquisition of information regarding a service information server for each service provider, that is, a Service Discovery (SD) server.

Meanwhile, the ITF may find the service discovery entry points by using one of the following three methods.

Firstly, the ITF uses a preset address or an address manually set by a consumer to find the address list of servers capable of acquiring the SP discovery information.

Secondly, the ITF uses a Dynamic Host Configuration Protocol (DHCP) option to find the address list of the servers capable of acquiring SP discovery information.

Thirdly, the ITF issues a query by using a DNS SRV mechanism to find the address list of servers capable of acquiring the SP discovery information.

In operation S20, the ITF may access each of the servers included in the address list found by one of the above methods, and thus receive an SP discovery record regarding at least one service provider from the server.

The SP discovery record may include information regarding the corresponding service provider, for example, information required for accessing the corresponding service provider and discovering services provided therefrom.

The SP discovery record may be transmitted by using at least one delivery mode of a push mode and a pull mode.

For example, in the case of the push mode, the ITF may receive the SP discovery record transmitted from the server using the DVBSTP according to the multicast scheme. In the pull mode, the ITF may receive the SP discovery record using the HTTP by requesting the transmission of the SP discovery record from the server.

Thereafter, the ITF collects service discovery information for each of the service providers in operation S30.

For example, the ITF may obtain Service Information (SI) regarding services provided from a service provider by using the SP discovery information received for each service provider, that is, the SP discovery record in operation S20.

By using the service information (SI) obtained in the above manner, the ITF may provide a consumer with program information such as EPG or the like and with access to a selected service.

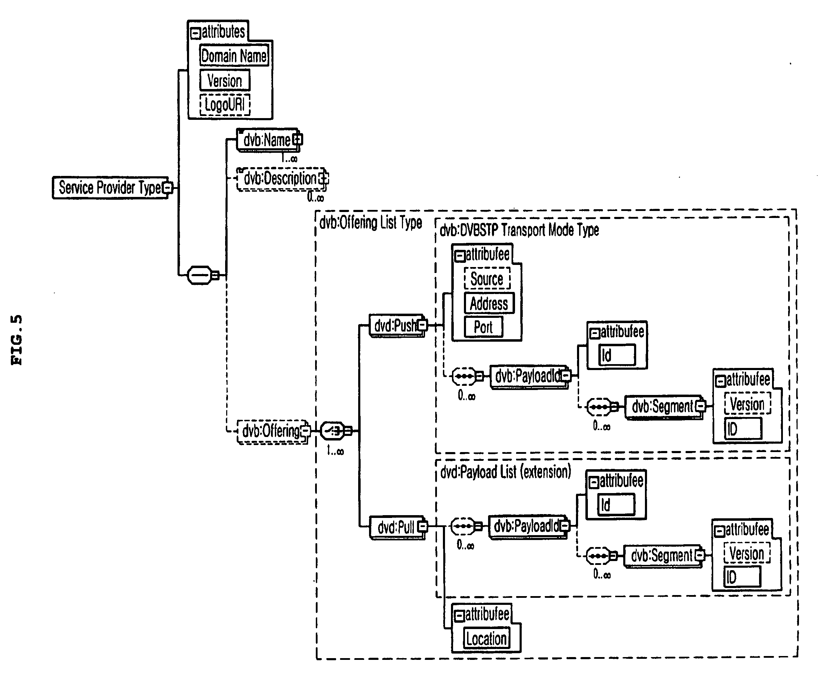

Fig. 5 illustrates one example of a configuration of the SP discovery information, which is a SP discovery record of a Digital Video Broadcasting (DVB)-IP expressed in the form of an XML schema.

Referring to Fig. 5, the SP discovery record may include a DomainName attribute, a Version attribute, a LogoURI attribute, a Name element, a Description element, and an offering element.

The DomainName attribute may represent an Internet DNS domain name registered by the corresponding service provider, and be used to identify the service provider.

The Version attribute may include version information of the record, and a version number may increase whenever any one of records including the service discovery information regarding the corresponding service provider changes.

The LogoURI attribute may specify a URI of a logo image of the corresponding service provider and may be selectively used.

The Name element may include name information of the corresponding service provider, and the name of the service provider may be expressed in one or more languages. To this end, the Name element includes a language attribute, and the language attribute includes information regarding a name defined in each language.

The Description element may include detailed text description information regarding the corresponding service provider, and the text description information may be provided in one or more languages. To this end, the description element includes a language attribute or a plurality of language attributes.

The offering element may include offering list information regarding a service offered by the corresponding service provider.

For example, the service provider may provide one or more offerings, and each of offerings, included in the offering element, may provide information regarding a specific service offered by the corresponding service provider, and more specifically, access information regarding streams carrying service information.

Meanwhile, the service information may be transmitted in at least one a push mode according to the multicast scheme and a pull mode according to a receiver's request.

In the case of the push mode, Source, Address and Port attributes depicted in Fig. 5 include information regarding an IP address and a port number providing DVB IP Offering records by the multicast scheme, and the DVB IP Offering records may describe the offerings offered by corresponding service providers.

Also, in the case of the pull mode, a Location attribute may include information regarding a Uniform Resource Identifier (URI) address providing the DVB IP offering records upon the receiver's request.

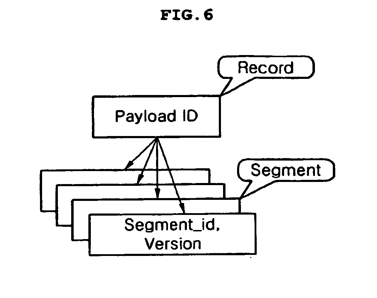

As shown in Fig. 6, an SD&S record including the above service discovery information may be divided into a plurality of segments and then transmitted.

In this case, a PayloadId element indicates the type of service discovery information included in a corresponding payload. To this end, the PayloadId element may include an Id attribute indicating identification information regarding the type of service discovery information used in the DVB IP Offering.

As the type of service discovery information specified by the Id attribute, there may be a broadcast discovery record, a CoD Discovery Record, or the like.

A Segment element may indicate a segment having service discovery information according to the Id attribute of the PayloadId element. To this end, the Segment element may include an Id attribute indicating identification information regarding each of the plurality of segments of the service discovery information.

Meanwhile, a Version attribute of the Segment element may include version information regarding a segment identified by the Id attribute, for example, a version number of the corresponding segment.

In the configuration of the SP discovery information described above with reference to Fig. 5, the SD&S information is divided into a plurality of segments for only transmission efficiency without a separate guide line or a separate description of information configuration, and only a list and version information regarding the segments may be provided to a receiver.

In this case, the IPTV receiver can obtain information required for configuring desired service information, for example, a channel map, only when having received every piece of SD&S information provided for each service provider.

As a result, in the case where SD&S information increases in amount and complexity, it takes long time for the IPTV receiver to access the IPTV service.

According one exemplary embodiment, the SD&S information is divided into a plurality of segments according to a specific criterion, and additional information regarding the segmentation criterion for the segments is provided, so that each IPTV receiver can preferentially receive segments containing required information, thereby increasing efficiency in processing.

For example, there may be various subscription models or packages in providing IPTV services. For example, there may be a package model in which packages are graded into Basic, Premium, Prestige and the like according to the number of subscribed channels such that an upper grade package has additional channels in addition to channels belonging to a lower grade package according to the number of subscribed channels.

In the case where a channel configuration is different in each region, local channels are grouped as separate packages, so that a specific channel package may be assigned for a region where corresponding channels are available.

In the case of channels providing distinctive contents such as movies, television drama series, comedies, and the like, a package may be formed according to the genre of each channel.

However, even when various package configurations are provided, without the provision of information regarding each package, an IP receiver needs to use an IPTV service after receiving and processing whole SD&S information and then extracting only information corresponding to a package to which a consumer is subscribing.

Therefore, according to an exemplary embodiment, the SD&S information is divided into segments in units of packages, and target package information regarding the divided segments is included in SP discovery information, thereby allowing an IPTV receiver to filter, receive or process service information according to the target package information.

In detail, the IPTV receiver may filter segments by using the target package information and receive only a corresponding segment by the unicast scheme. In the case of the multicast, only a segment corresponding to a subscribed package among the received segments may be parsed and processed.

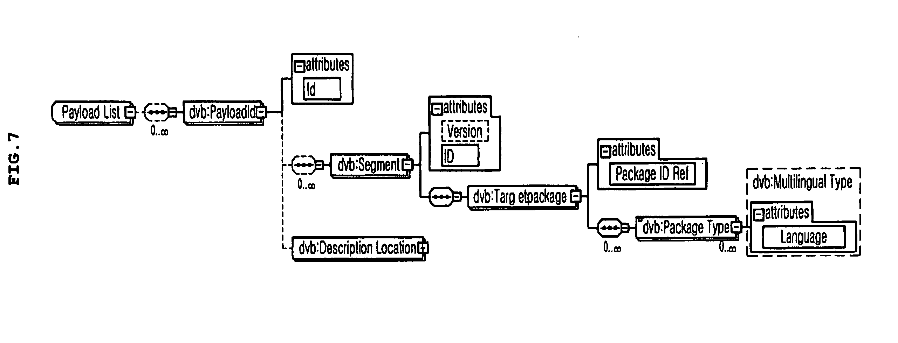

Fig. 7 illustrates a configuration of SP discovery information according to a first exemplary embodiment. In the configuration of the SP discovery information depicted in Fig. 7, a description of the same parts as those described above with reference to Figs. 5 and 6 is omitted.

Referring to Fig. 7, a Segment element may include a TargetPackage element as a child element.

The TargetPackage element indicates a target package to which a corresponding segment relates. The target package may refer to a package which service discovery information included in the segment belongs to.

To this end, the TargetPackage element may include a PackageIDRef attribute indicating identification information of the package to which the service discovery information included in the corresponding segment belongs.

That is, the PackageIDRef attribute may contain an identifier of a package record for a package discovery element to which the information of the segments belongs.

Also, the TargetPackage element may include a PackageType element for indicating a description of the target package, and the PackageType element may indicate type information regarding the corresponding package.

Meanwhile, the package type may be provided in one or more languages. To this end, the PackageType element may include a Language attribute. The Language attribute of the PackageType element may include information regarding a package type defined in each language.

The PackageType element may be selectively used, and may be description of the Target Package which can be used for filtering the segments.

For example, a plurality of segments of the service discovery information may be subjected to filtering, and the PackageType element may be used to receive or process a portion of the segments.

For example, the PackageType element may indicate the kind of the package, information technique for configuration thereof, criteria of constituting the corresponding package, or the like. In more detail, the PackageType element may indicate whether the package is a Basic package, a Premium package, a local package, a channel group divided by genre such as movie or comedy, according to a subscription model of the IPTV receiver.

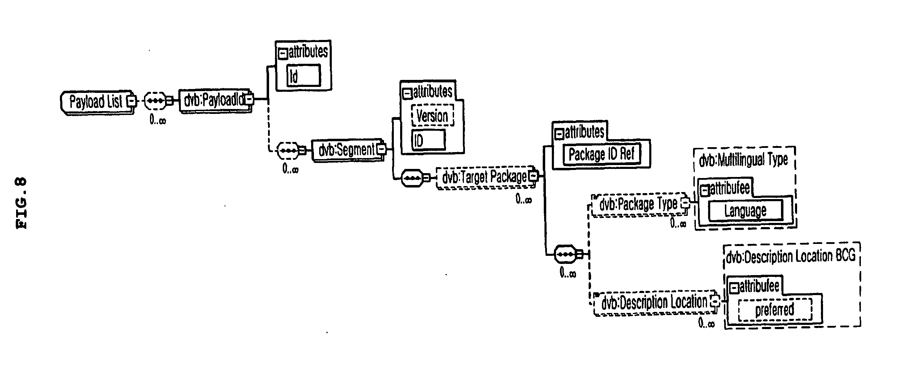

Referring to Fig. 8, the TargetPackage element may include a DescriptioLocation element providing a location of BCG information allowing for the acquisition of additional description of the corresponding package.

For example, the DescriptioLocation element may provide an identifier of a BCG record containing a description of the corresponding information in BCG Discovery information.

In this case, the IPTV receiver may receive the description of the package by using BCG access information included in a record corresponding to a BCG ID provided in the DescriptioLocation element.

In another exemplary embodiment, the DescriptioLocation element may provide URI information, information regarding a BCG stream. To this end, the DescriptioLocation element may include a preferred attribute, which is a Boolean flag indicating whether or not a corresponding description location is a preferred location for the information.

In this case, the IPTV receive, even before receiving BCG Discovery information, may obtain the description of the corresponding package by directly accessing the BCG stream using the URI information provided in the DescriptioLocation element.

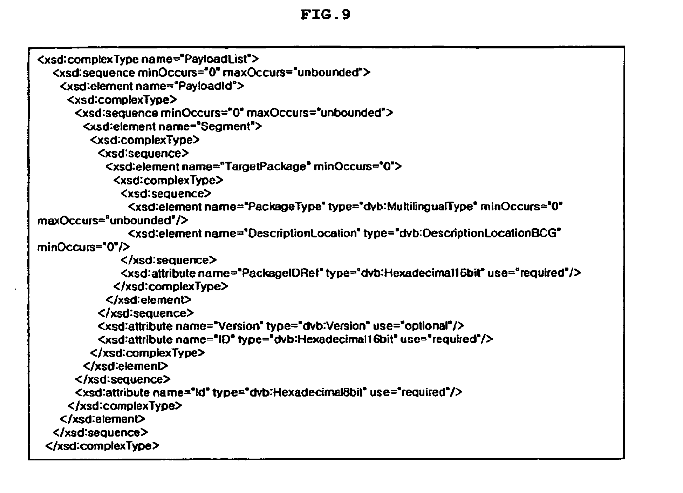

Meanwhile, the SP Discovery information as described with reference to Fig. 8 may be implemented by using an XML schema depicted in Fig. 9.

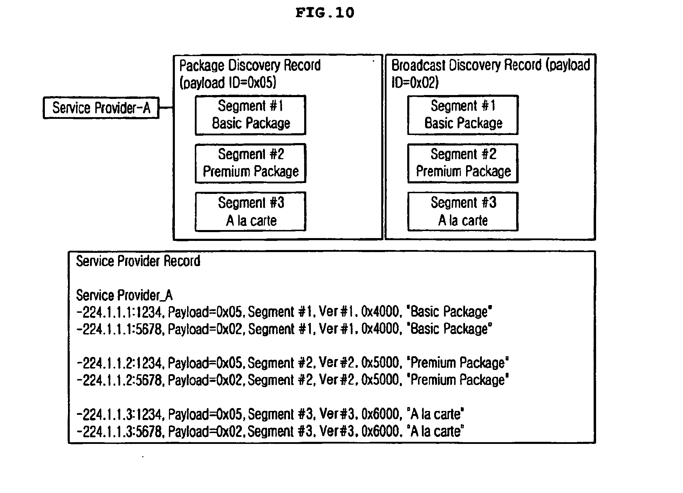

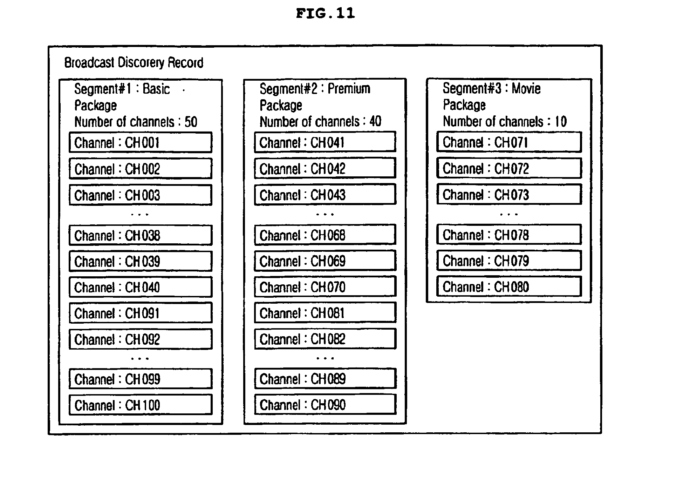

Hereinafter, with reference to Fig. 10 and 11, exemplary embodiments of a method of dividing service discovery information in units of packages will be described in detail.

A service provider may divide a broadcast discovery record, containing information required for finding available live media broadcast services, into a plurality of segments depending on packages of respective services, and transmit the same.

In this case, the segments of the broadcast discovery record, being separately transmitted, may each include information regarding a service belonging to a specific package.

Also, the service provider may divide a package discovery record, containing package information required for grouping a plurality of services, into a plurality of segments and transmit the same.

In this case, the segments of the package discovery record, being separately transmitted, may each include information regarding a specific package corresponding thereto.

Referring to Fig. 10, service provider A may provide three different packages of a "Basic" Package, a "Premium" Package and an "A la carte".

To this end, the service provider A may create three segments respectively corresponding to the "Basic" Package, the "Premium" Package and the "A la carte" within a broadcast discovery record, and the segments may include information regarding services belong to the corresponding packages, respectively.

For example, in the broadcast discovery record, Segment #1 may include information regarding services belonging to the "Basic" Package, Segment #2 may include information regarding services belonging to the "Premium" Package, Segment #3 may include information regarding services belonging to the "A la carte".

Furthermore, the service provider A may assign different multicast groups for respectively transmitting segments divided in units of packages as described above.

Meanwhile, the service provider A may create, in a package discovery record, three segments to provide package information regarding the "Basic" Package, the "Premium" Package and the "A la carte", respectively.

In this case, as shown in Fig. 10, SP Discovery information may include information regarding a package corresponding to each segment of a package discovery record having an payload ID of "0x05".

Also, target package information regarding each segment of a broadcast discovery record having a payload ID of "0x02" may also be included in the SP Discovery information.

Referring to Fig. 11, in the case of 100 channels, a service provider may provide a "Basic" Package including "CH001" to "CH040" and "CH040" to "CH091", a "Premium" Package including "CH041" to "CH070" and "CH081" to "CH090", and a "Movie" Package including "CH071" to "CH080".

In this case, a broadcast discovery record may be divided into three segments of Segment #1, Segment #2 and Segment #3 and then transmitted. The divided Segment #1 includes information regarding services provided in "CH001" to "CH040" and "CH040" to "CH091", the Segment #2includes information regarding services provided in "CH041" to "CH070" and "CH081" to "CH090", and the Segment #3 may include information regarding services provided in "CH071" to "CH080".

Meanwhile, target package information regarding each of the segments of the broadcast discovery record may be included in SP discovery information and transmitted to an IPTV receiver.

The IPTV receiver may make a request for only a segment corresponding to a specific package among the segments of the broadcast discovery record by using the target package information included in the SP Discovery information, and receive it by the unicast scheme.

For example, in the case depicted in Fig. 1, the IPTV receiver may make a request for only the Segment #2, related to the "Premium" Package to which the IPTV receiver is subscribing, among the segments of the broadcast discovery record, and constitutes a channel map by using information regarding services belonging to the "Premium" Package, received in response to the request.

Meanwhile, the IPTV receiver may perform parsing and processing upon only a segment corresponding to a specific package among the segments of the broadcast discovery record being received by the multicast scheme, by using the target package information included in the SP Discovery information.

For example, in the case depicted in Fig. 11, the IPTV receiver may receive the whole segments of the broadcast discovery record included in a multicast steam, and then parse and process only service information included in the Segment #2, associated with the "Premium" Package to which the IPTV receiver is subscribing, among the received segments.

In the above embodiment, the case where one specific segment has one target packet has been described by way of example. However, two or more package may be assigned to a single segment.

In this case, a Segment element as described with reference to Fig. 7 may include two or more TargetPackage elements, and accordingly, include information regarding two or more packages in the single Segment element.

In the case where two or packages are assigned to a single segment as described above, service information received or processed by the IPTV receiver through filtering using the target package information may include service information regarding a package to which the IPTV receiver does not subscribe.

In this case, the IPTV receiver may need to perform the additional process of extracting information regarding services belonging to a package to which the IPTV receiver is subscribing, from the processed service information.

However, when the size of the service information regarding services belonging to a specific package is small, it may be more efficient, in terms of transmission, to include the service information in a single segment together with service information belonging to another package.

According to another exemplary embodiment, such target packages may be specified in units of payloads.

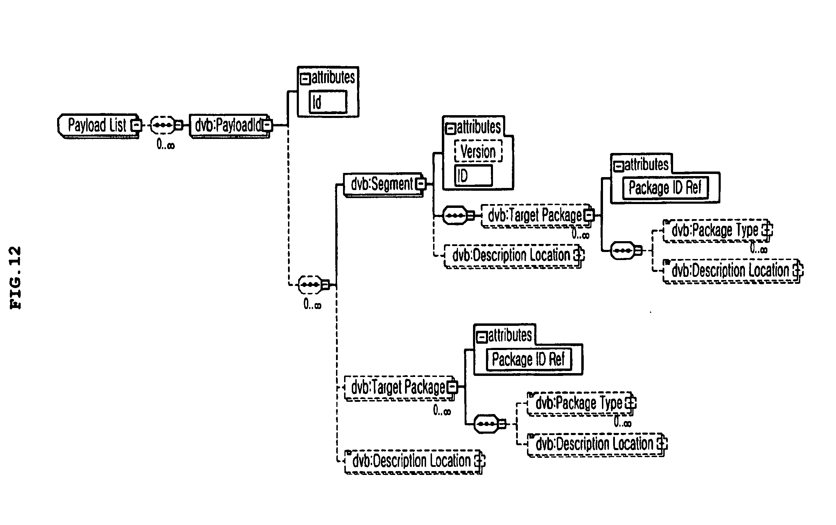

Fig. 12 illustrates a configuration of SP discovery information according to a third exemplary embodiment. In the configuration of the SP discovery information depicted in Fig. 2, a description of the same parts as those described with reference to Figs. 5 to 11 is omitted.

Referring to Fig. 12, a PayloadId element may include a TargetPackage element indicating target package information regarding a corresponding payload, and the TargetPackage element indicates a target package of a corresponding segment. The target package may refer to a package to which service discovery information included in the payload belongs.

In this case, every target package associated with segments belonging to the corresponding payload can be signaled at a payload stage. Therefore, if a target package is not separately specified at a segment stage, target package information specified at the upper payload stage may be applied to all the segments of the lower stage. Accordingly, target package information specified at the payload stage may be linked to information within the segments belonging to the corresponding payload.

Meanwhile, in the case where a target package is specified at the segment stage, it overrides target package information specified at the upper payload stage, so that the target package information specified at the segment stage may be applied to the corresponding segment.

Referring to Fig. 12, a Segment element may include a DescriptioLocation element providing a location of BCG information, which is additional guide information for the corresponding segment.

Furthermore, a PayloadId element may include a DescriptioLocation element providing a location of BCG information, additional guide information regarding a corresponding a payload.

Meanwhile, to ensure backward compatibility, the PayloadId element may need to be arranged and then followed by the TargetPackage element and the DescriptionLocation element. Thus, the TargetPackage element and the DescriptionLocation element of the payload stage exist to be subordinate to the PayloadID element.

As described above, the DescriptioLocation elements allowing for the acquisition of an additional description of the payload and segment are provided at the payload stage and the segment stage within SP discovery information, so that BCG information and SD&S information configured in units of packages can interwork with each other.

Accordingly, the IPTV receiver can perform filtering upon payloads and segments according to the target package information included in the SP discovery information, while directly accessing the additional description of the filtered payload or segment by using the DescriptionLocation information included in the SP discovery information.

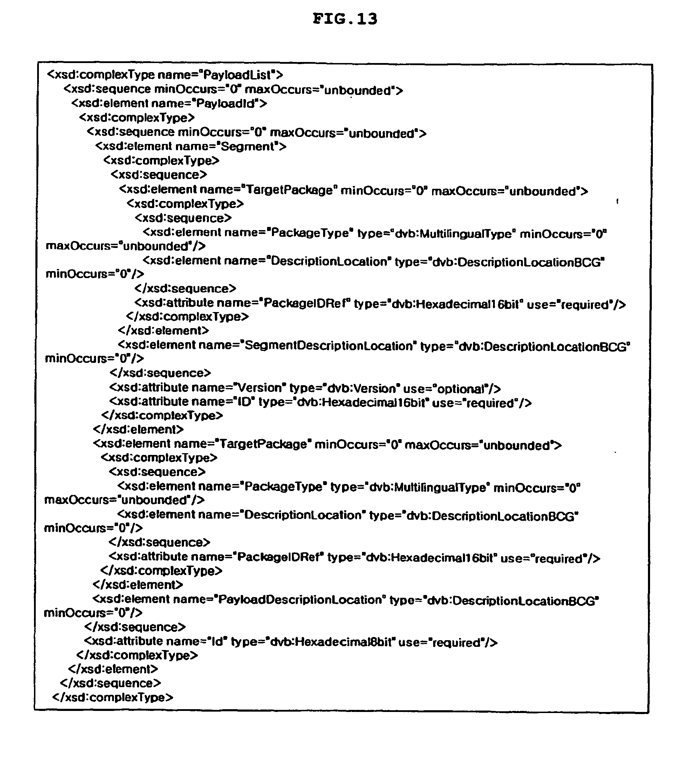

Meanwhile, the SP discovery information as described with reference to Fig. 12 may be implemented by using an XML schema depicted in Fig. 13.

According to another exemplary embodiment, payloads or segments as described above may be prioritized for processing, so that a payload or a segment having a high priority according to a specific criterion can be received and processed first.

As described above, by assigning a priority for the reception and processing of the SD&S information, the IPTV receiver can be more efficiently receive and process the SD&S information.

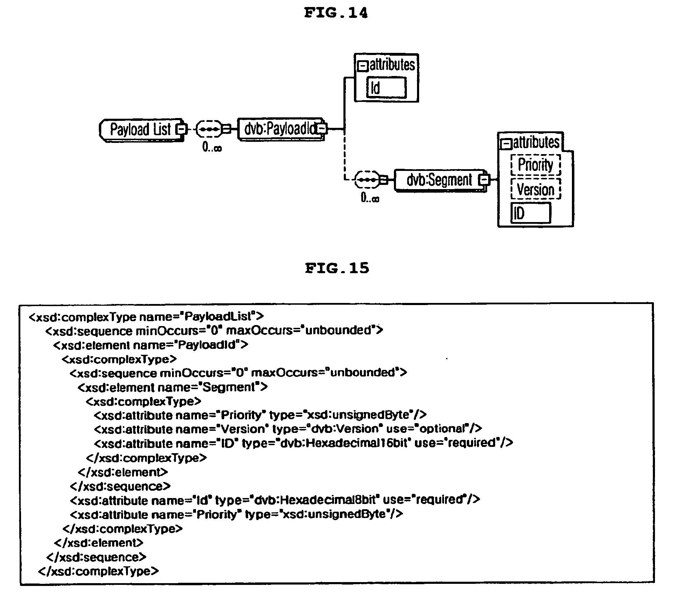

Fig. 14 illustrates a configuration of SP discovery information according to a fourth exemplary embodiment. In the configuration of the SP discovery information depicted in Fig. 14, a description of the same parts as those described above with reference to Figs. 5 to 13 is omitted.

Referring to Fig. 14, a Payload element may include a Priority attribute indicating a priority assigned to a corresponding payload. A Segment element may include a Priority attribute indicating a priority assigned to a corresponding segment.

In this case, the priority assigned to the payload is considered to be higher than the priority assigned to the segment. Thus, the priority assigned to the segment can have significance when the priority of segments belonging to a single payload or of segments belonging to payloads having the same priority is determined.

Meanwhile, segments belonging to a payload with a higher priority always have higher priorities than those of segments belonging to a payload with a lower priority. A payload or a segment having no priority assigned may be determined as having the lowest priority.

For example, a value of a Priority attribute assigned to the payload or the segment may be any one integer between 0 and 7. The bigger the value of the Priority attribute, the higher the priority of the corresponding payload or segment

Also, as one exemplary embodiment of a prioritization method as described above, target package information may have a higher priority in SP discovery information.

Therefore, the IPTV receiver may first receive the target package information of the SP discovery information to thereby determine a required package, and selectively receive service information belonging to the package.

Meanwhile, a high priority may be assigned to BCG Discovery information, so that the IPTV receiver can receive BCG information first and process the same. Accordingly, the reception of the BCG information can be made in a parallel manner with respect to the above service discovery process.

Meanwhile, the SP discovery information as described with reference to Fig. 14 may be implemented by using an XML schema depicted in Fig. 15.

According to another exemplary embodiment, a specific device, a device class and a device group of a plurality of devices may be designated for payloads or segments as described above, so that only the designated device can process the corresponding payload or segment.

Information regarding the designated device group (i.e., device group information) may be used to limit devices capable of receiving not only information regarding IPTV services such as broadcast discovery information but also information used for management such as RMS-FUS Firmware Update Announcements information and the like.

Furthermore, the device group information may be used to limit the reception and processing of corresponding information to only an IPTV service having functions required for a specific package or an IPTV service.

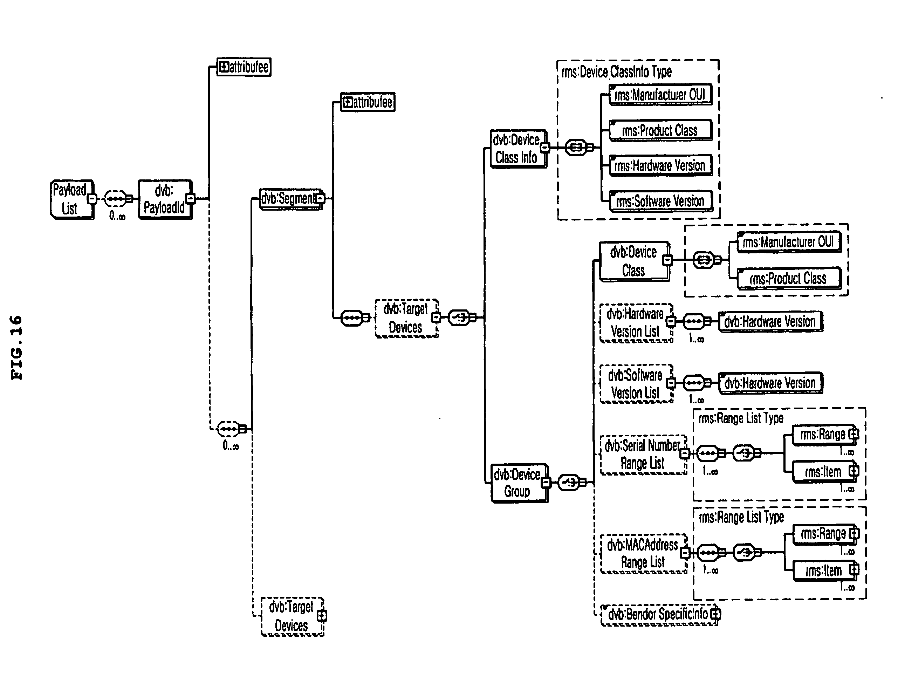

Fig. 16 illustrates a configuration of SP discovery information according to a fifth exemplary embodiment. In the configuration of the SP discovery information depicted in Fig. 16, a description of the same parts as those described above with reference to Figs. 5 to 15 is omitted.

Referring to Fig. 16, a Payload element may include a TargetDevices element indicating a target device capable of receiving and processing a corresponding payload. A Segment element may also include a TargetDevices element indicating a target device capable of receiving and processing a corresponding segment.

In this case, target device information specified at an upper payload stage may be applied to all the segments belonging thereto. In the case where a target device is specified at a segment stage, it overrides the target device information specified at the upper payload stage, so the target device information specified at the segment stage can be applied to the corresponding segment.

As one exemplary embodiment of a method of specifying the target device, the TargetDevices element may include a DeviceClassInfo element providing Class information of devices capable of receiving and processing a corresponding payload or segment.

Meanwhile, the DeviceClassInfo element may include a ManufacturerOUI element indicating a manufacturer identification number, a ProductClass element indicating a Product class assigned by a manufacturer, a HardwareVersion element indicating a hardware version of a device, and a Software Version element indicating a software virsion.

By specifying attribute values of the ManufacturerOUI, ProductClass, Product class, HardwareVersion and SoftwareVersion elements as described above, a service provider may limit a target device so as to allow only a device having attributes coinciding with the specified attribute values to receive a corresponding payload or segment and process the same.

As another exemplary embodiment of the method of specifying the target device, the TargetDevices element may include a DeviceGroup element providing filter information for identifying a target device group.

In this case, a class of a target device group may be specified by using a ManufacturerOUI attribute value and a ProductClass attribute value of a deviceClass included in the DeviceGroup element, and attributes of the target device group may be selectively specified by using elements other elements included in the DeviceGroup element

For example, as shown in Fig. 16, a hardware version list and a software version list of a target device group may be specified by a HardwareVersionList element and a SoftwareVersionList element included in the DeviceGroup element, and a serial number range or list of the target device group may be specified by a SerialNumberRangeList element.

Furthermore, a Mac address range or list of the target device group may be specified by a MACAddressRangeList element, and another device information that may be given by an IPTV receiver vendor may be specified by a VendorSpecificInfo element.

Meanwhile, an IPTV receive may determined whether or not it can receive and process a corresponding payload or segment by applying an AND operation to conductions of a target device, specified by the elements as above.

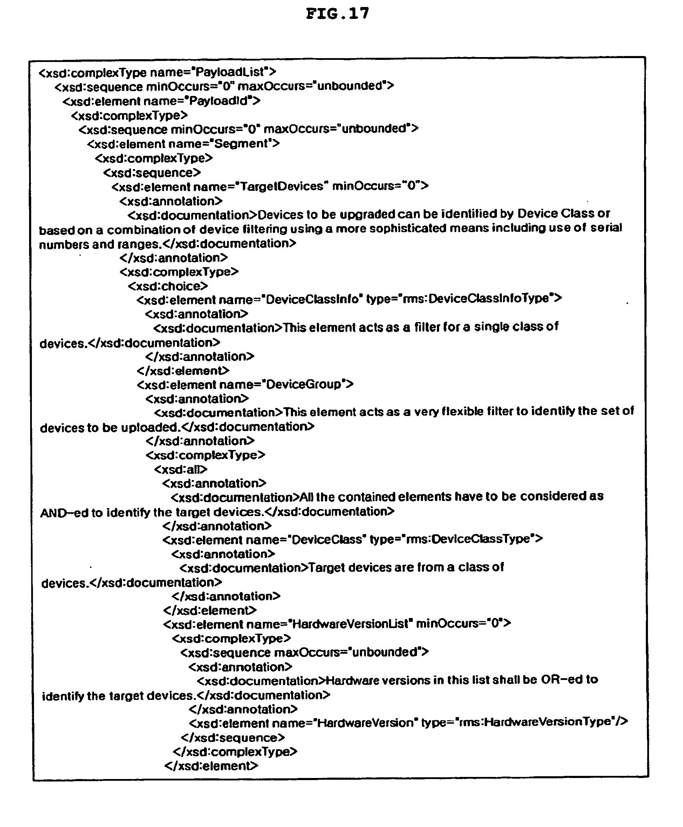

Meanwhile, the SP discovery information as described with reference to Fig. 16 may be implemented by using an XML schema depicted in Figs. 17 to 19.

According to another exemplary embodiment, information regarding functions necessarily required by an IP receiver to use a specific package or service is provided, so as to allow the IPTV receiver to filter information regarding a package or a service unavailable to the IPTV receiver.

For example, hardware conditions such as a resolution, an AV codec, a memory, CPU performance, storage or the like that need to be supported by a receiver for a specify payload or segment, or functional conditions such as PVR, TimeShift, or the like are specified, so that only a receiver satisfying the specified conditions is allowed to receive and process the corresponding payload or segment.

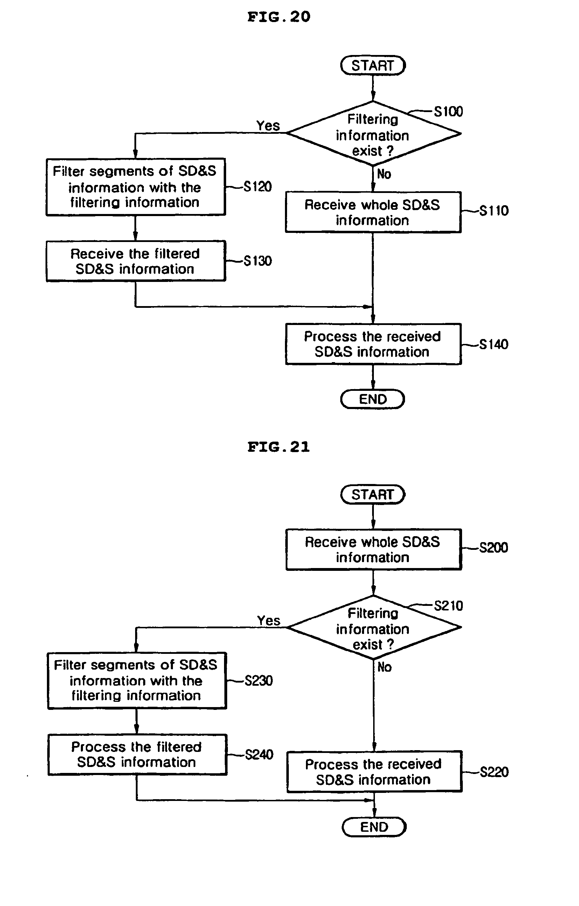

Hereinafter, a method for IPTV service discovery according to exemplary embodiments of the present invention will be described in more detail with reference to Figs. 20 to 24.

Fig. 20 is a flowchart illustrating a method for IPTV service discovery according to a first exemplary embodiment, and shows a method of collecting service discovery information in operation S30 of Fig. 4.

Referring to Fig. 20, an IPTV receiver checks whether or not filtering information exists in SP discovery information in operation S100.

For example, the IPTV receiver may checks whether or not target package information regarding a segment exists in the SP discovery information collected in operation S20 depicted in Fig. 4.

When the filtering information does not exist, the IPTV receiver receives whole SD&S information included in a corresponding offering by using the SP discovery information in operation S110.

Meanwhile, when the filtering information exists, the IPTV receiver filters segments including the SD&S information by using the filtering information in operation S 120, and receives the filtered SD&S information in operation S130.

For example, the IPTV receiver may check target package information regarding segments including the SD&S information, request only a segment belonging to a specific package among the segments from a server, and receives it upon the request.

Thereafter, the IPTV receiver parses and processes the received SD&S information in operation S140.

Meanwhile, the IPTV receiver may form a channel map by using the processed SD&S information and provides a consumer with EPG or the like for an IPTV service.

In the method for service discovery described with reference to Fig. 20, the SD&S information is transmitted by the unicast scheme. In the case where the SD&S information is transmitted by the multicast scheme, service discovery may be performed by using a method depicted in Fig. 21.

Referring to Fig. 21, an IPTV receiver receives whole SD&s information included in a corresponding offering by using SP discovery information in operation S200.

The IPTV receiver checks whether or not filtering information exists in operation S210. Subsequently, when the filtering information does not exist, the received SD&S information is parsed and processed in operation S220.

For example, by joining a multicast stream carrying the SD&S information, the IPTV receiver can receive whole SD&S information being transmitted.

In this case, the IPTV receiver may check whether or not target package information exists in a DVBSTP header of an IP package of the multicast stream being received.

When the target package information does not exist, the IPTV receiver may extract segments present in a payload portion of the received IP package, and parse and process whole SD&S information included in the extracted segments.

Meanwhile, when the filtering information exists, the IPTV receiver filters segments of the received SD&S information by using the filtering information in operation S230, and the filtered SD&S information is parsed and processed in operation S240.

For example, in the case where target package information exists in a DVBSTP header of a received IP package included in the multicast stream, the IPTV receiver may extract only a segment belonging to a specific segments from segments including the SD&S information, and parse the same.

In the case where the SD&S information is transmitted by the multicast scheme, since filtering is performed by using the target package information in the IP package processing process as described above, a process of parsing unnecessary SD&S information is omitted, thereby enhancing efficiency in processing.

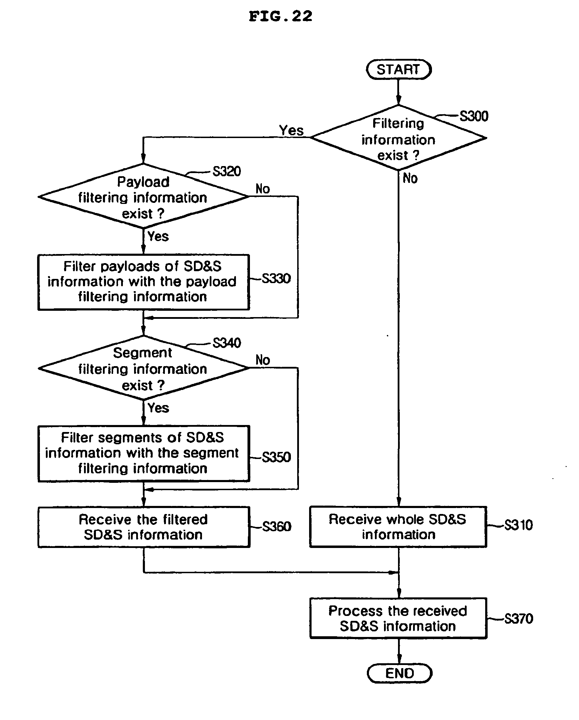

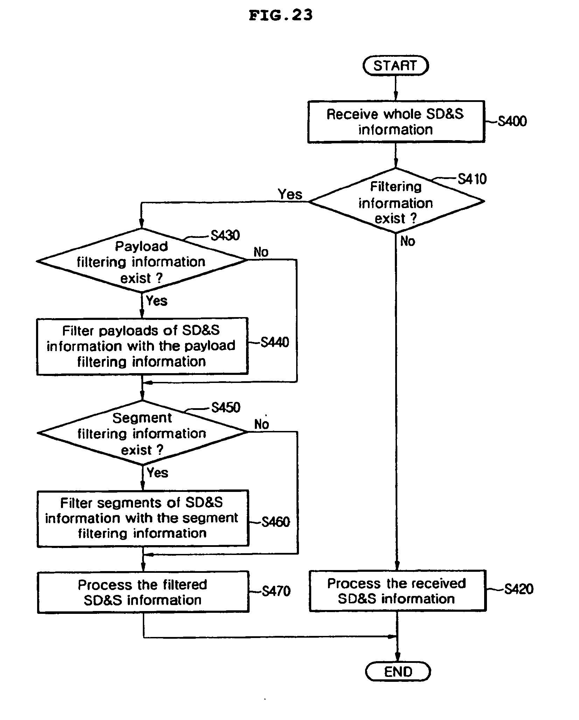

Figs. 22 and 23 are flowcharts of a method for IPTV service discovery according to other exemplary embodiments of the present invention, which are associated with the case where a target package is specified not only in a segment of SD&S information but also at a payload stage.

Meanwhile, the methods for service discovery depicted in Figs. 22 and 23 may be available for SD&S information transmitted by the unicast and multicast schemes.

Referring to Fig. 22, an IPTV receiver checks whether or not filtering information exists in SP discovery information in operation S300. When the filtering information does not exist, the IPTV receiver receives whole SD&S information included in a corresponding offering in operation S310.

When the filtering information exists, the IPTV receiver checks whether or not filtering information for payloads (hereinafter, also referred to as payload filtering information) exists in operation S320. When the payload filtering information exists, payloads including the SD&S information are filtered by using the payload filtering information S330.

Also, the IPTV receiver checks whether or not filtering information for segments (hereinafter, also referred to as segment filtering information) exists in operation S340. When the segment filtering information exists, the IPTV receiver filters segments including the SD&S information by using the segment filtering information in operation S330.

For example, the filtering information may be target package information of payloads or segments. The configuration of the target package information may be identical to the descriptions made with reference to Figs. 5 to 13.

In operation S360, the IPTV receiver receives the SD&S information filtered through operations S320 to S350.

For example, the IPTV receiver may check target package information of payloads or segments including the SD&S information, request only SD&S information belonging to a specific package from a server, and receive the SD&S information in response..

Thereafter, the IPTV receiver parses and processes the received SD&S information in operation S370.

Referring to Fig. 23, an IPTV receiver receives whole SD&S information included in a corresponding offering by using SP discovery information in operation S400, and then checks whether or not filtering information exists in operation S410.

When the filtering information does not exist, the received SD&S information is parsed and processed in operation S420.

Meanwhile, when payload filtering information or segment filtering information exist in operation S430 and 450, respectively, the IPTV receiver filter the payloads or segments of the received SD&S information by using the filtering information in operations S440 and S460.

Thereafter, the IPTV receiver parses and processes the filtered SD&S information in operation S470.

For example, the IPTV receiver extracts only a payload or a segment belonging to a specific package among the payloads or the segments of the received SD&S information, and parses the extracted payload or segment, thereby making it possible to obtain service information for channel map construction.

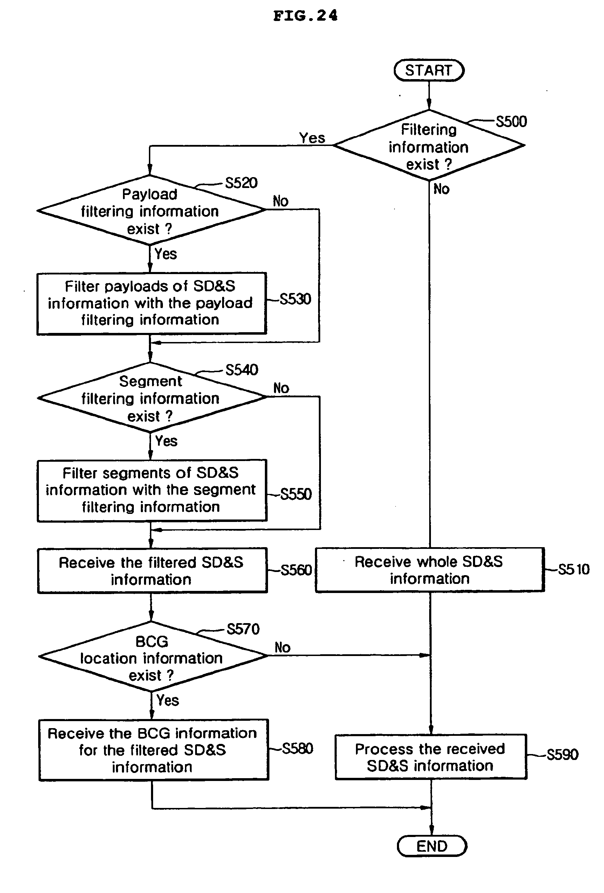

Fig. 24 is a flowchart of a method for IPTV service discovery according to another exemplary embodiment, which is associated with the case where BCG information for a payload or a segment is received in a service discovery process.

Meanwhile, the operations of the method depicted in Fig. 24, other than operations S570 and S580 associated with the reception of the BCG information, may be identical to those of the service discovery method described above with reference to Fig. 22. Therefore, a description thereof is omitted.

Referring to Fig. 24, when the filtering information exists, an IPTV receiver performs filtering upon payloads or segments of SD&S information according to the filtering information in operations S500 to S560, and then checks whether or not BCG information for a payload or a segment exists in operation S570.

When the BCG location information exists, the IPTV receiver receives BCG information for the filtered payload or segment by using the BCG location information in operation S580.

For example, as described above with reference to Figs. 8 and 12, the SP discovery information may provide a location of BCG information including an additional description regarding a payload, a segment or a target package.

In this case, the IPTV receiver may check BCG location information included in SP discovery information, and subsequently, receive BCG information for a payload or a segment belonging to a specific package.

If the BCG location information for a payload or a segment is not included in the SP discovery information, the IPTV receiver can receive required BCG information only upon receiving whole SD&S information.

Therefore, by using the BCG location information included in the SP discovery information, the IPTV receiver can select only BCG information regarding a payload or a segment belonging to a required specific package and receive the same in advance, thereby ensuring efficient reception and processing even for a large amount of BCG information.

According to an exemplary embodiment, an IPTV receiver may repeatedly perform the operations, as described with reference to Figs. 20 to 24, and also repeatedly perform the operations for each of offering included in SP discovery information with respect to a specific service provider. Accordingly, the IPTV receiver can receive and process SD&S information having information regarding available IPTV services on an IP network.

Meanwhile, in the case where the IPTV receiver filters only a payload or a segment belonging to a specific package from SD&S information by using the filtering information, for example target package information, and thus receives or parses the same, the specific package may be a package to which the IPTV receiver is subscribing.

For example, an IPTV receiver subscribing to a "Basic" package filters a payload or a segment belonging to the "Basic" package from SD&S information and receives the same. Thus, the IPTV receiver may not receive information regarding a service belonging to a package to which the IPTV receiver is not subscribing.

Meanwhile, as another exemplary embodiment, the IPTV receiver may additionally receive service information belonging to an unsubscribed package upon a consumer's request or according to an intention of a service provider.

For example, when a consumer subscribing to a "Basic" package makes a request to check information regarding a service provided in a "Premium" package, the IPTV receiver may additionally receive a payload or a segment belonging to the "Premium" package, as well as a payload or a segment belonging to the "Basic" package, by using target package information included in SP discovery information.

Furthermore, for the purpose of advertising to promote package subscription, a service provider may provide service information regarding an upper package than a package to which a consumer is subscribing. In this case, the IPTV receiver may also receive not only a subscribed package but also a payload or a segment of SD&S information belonging to another package designated by a service provider.

An IPTV receiver according to an exemplary embodiment may perform the service discovery methods as described above with reference to Figs. 4 to 24.

To this end, the IPTV receiver may includes a network interface receiving SP discovery information and receiving service discovery information divided into a plurality of segments by using the received SP discovery information, a data decoder parsing the received service discovery information to obtain service information, and a control unit performing filtering upon the plurality of segments by using target package information included in the SP discovery information.

Meanwhile, the SP discovery information may have a configuration as described above with reference to Figs. 5 to 19.

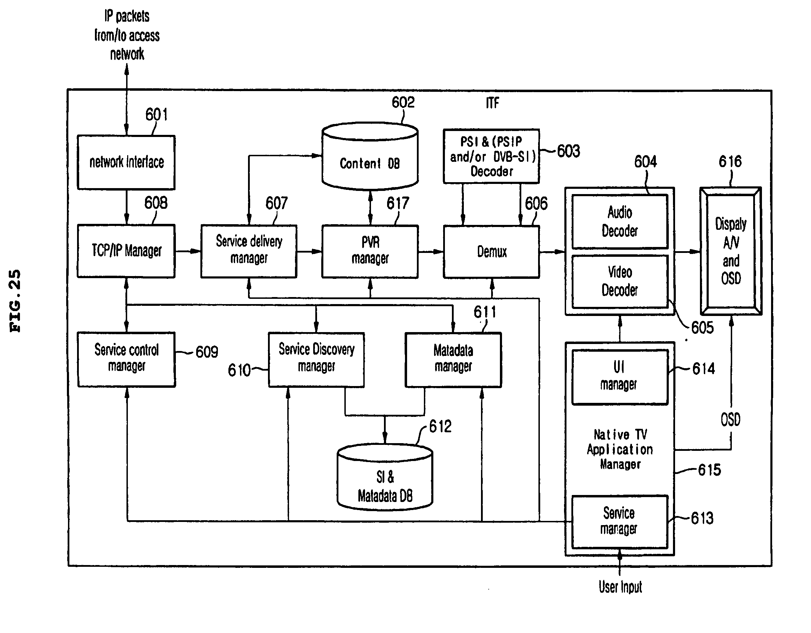

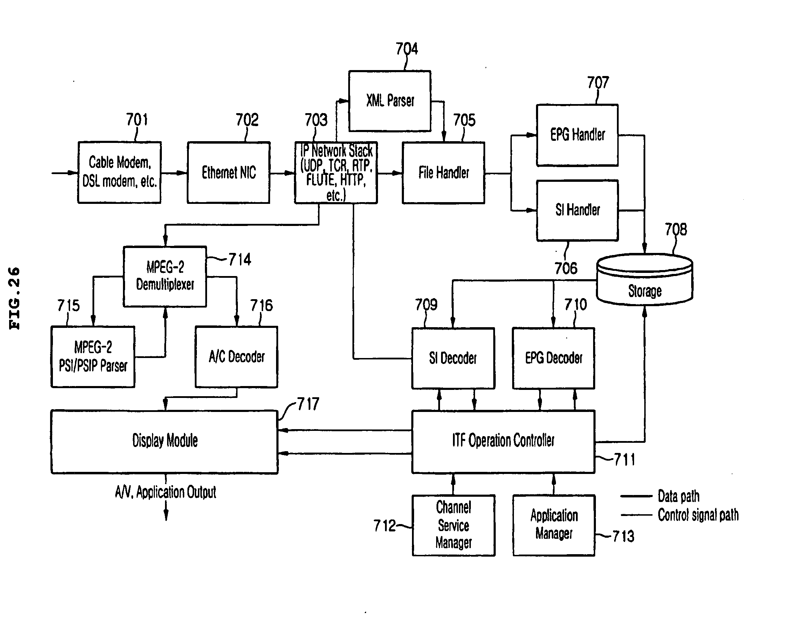

Hereinafter, a configuration of the IPTV receiver according to an exemplary embodiment will be described in more detail with reference to Figs. 25 and 26.

Fig. 25 is a block diagram of an IPTV receiver according to an exemplary embodiment.

An IPTV receiver 600 according to an exemplary embodiment may include a separate tuner or the like in order to receive terrestrial television broadcasting, cable broadcasting, cable broadcasting, satellite broadcasting and the like. However, for ease of description, a configuration for receiving an IPTV service provided through an IPTV network will be mainly described.

Meanwhile, an ITF stands for an Open IPTV Terminal Function and may refer to a receiver including a functional module required for supporting an IPTV service.

The IPTV receiver may include a network interface 601, a TCP/IP manager 608, a service delivery manager 607, a PVR manager 617, a demultiplexer (i.e., a demux) 606, a data decoder 603, an audio decoder 604, a video decoder 605, a display (i.e., an AN display & OSD module) 616, an application manager 615, a service information database (i.e., an SI & Metadata DB) 612, a service discovery manager 610, a service control manager 609, a metadata manager 611, and a content database (i.e., a content DB) 602.

Referring to Fig. 25, the network interface 601 receives packets from a network and transmits packets to the network. That is, the network interface 601 receives services, contents and the like from a service provider through the network.

TCP/IP manager 608 is involved in packet transfer from a source to a destination with respect to a packet received in the IPTV receiver 600 and a packet transmitted from the IPTV receiver 600. Furthermore, the TCP/IP manager 608 sorts out the received packet according to an appropriate protocol, and outputs the sorted packet to the service delivery manager 607, the service discovery manager 610, the service control manager 609, and the metadata manager 611.

The service delivery manager 607 controls service data being received. For example, a Real-time Transport protocol (RTP)/RTP Control Protocol (RTCP) may be used in controlling real-time streaming data.

When the real-time streaming data is transmitted using the RTP, the service delivery manager 607 parses a received data packet according to the RTP, and transmits the parsed data to the demultiplexer 606 or store it in the content DB 702 upon the control of the service manager 613. Also, the service delivery manager 607 feeds back the network reception information to a server side providing a service by using the RTCP.

The demultiplexer 606 performs demultiplexing the received packet into audio, video and Program Specific Information (PSI) data, and forwards the audio, video and PSI data to the audio decoder 604, the video decoder 605, and the data decoder 603, respectively.

The data decoder 603 decodes, for example, service information such as PSI information or the like. That is, the data decoder 603 receives a PSI section, a Program and Service Information Protocol (PSIP) section, or DVB-Service Information (SI) or the like, demultiplexed by the demultiplexer 606, and decode the same.

Also, the data decoder 603 creates a database regarding service information by decoding the received sections, and stores the database regarding service information in the service information database 612.

The audio decoder 604 and the video decoder 605 decode audio data and video data received from the demultiplexer 606, respectively. The audio data decoded by the audio decoder 604 and the video data decoded by the video decoder 605 are provided to a consumer through the display 616.

The application manager 615 manages the overall state of the IPTV receiver 600, provides a [0105] user interface, and manages another manager. To this end, the application manager 615 includes a user interface manager (i.e., a UI manager) 614 and a service manager 613.

The user interface manager 614 provides a Graphic User Interface (GUI) for a consumer by using an On Screen Display (OSD) or the like, receives a key input from a consumer, and performs a receiver operation according to the input. For example, when a key input for channel selection is received from a consumer, the user interface manager 614 transmits the key input signal to the service manager 613.

The service manager 613 controls service-related managers, such as the service delivery manager 607, the service discovery manager 610, the service control manager 609, the metadata manager 611, and the like.

Also, the service manager 613 creates a channel map and selects a channel using the channel map according to the key input received from the user interface manager 614. The service manager 613 receives service information regarding the selected channel from the data decoder 603, and sets an audio/video Packet Identifier (PID) of the selected channel in the demultiplexer.

The service discovery manager 610 provides information required for selecting a service provider providing a service. When receiving a signal regarding channel selection from the service manager 613, the service discovery manager 610 finds a service by using the information.

The service control manager 609 is in charge of service selection and control. For example, when a consumer selects a live broadcasting service as in an existing broadcasting scheme, the service control manager 609 uses an Internet Group Management Protocol (IGMP) or an RTSP. When the consumer selects a service such as Video On Demand (VOD), the service control manager 609 may perform service selection and control by using the RTSP.

The RTSP may provide a trick mode for real-time streaming. Also, the service control manager 609 may initialize and manage a session through an IMC gateway by using an IP Multimedia Subsystem (IMS) and a Session Initiation Protocol (SIP). Those protocols are merely one embodiment, and another protocol may be used according to an implementation example.

The metadata manager 611 manages service-related metadata, and stores the meta data in the service information database 612.

The service information database 612 stores therein service information decoded by the data decoder 603, metadata managed by the metadata manager 611, and information required for selecting a service provider, provided by the service discovery manager 610. Also, the service information database 612 may store setup data for a system, and the like therein.

The service information database 612 and the content database 602 may each be implemented by using a nonvolatile memory (i.e., a Non-Volatile RAM:NVRAM), a flash memory or the like, or may be implemented as two logically separated regions on one storage region.

The PVR manager 617 is a module for recording and reproducing live streaming contents. The PVR manager 617 may collect metadata regarding recorded contents, and generate additional information provided to a consumer, such as a thumbnail image or an index.

Functions of the control unit of the IPTV receiver according to this exemplary embodiment may be implemented separately by a plurality of modules such as the TCP/IP manager 608, the service delivery manager 607, the PVR manager 617, the application manager 615, the service discovery manager 610, the service control manager 609, and the metadata manager 611, depicted in Fig. 25.

For example, the TCP/IP manager 608 may filter SD&S information by using target package information as described above to thereby control the network interface 601 to request only a payload or a segment corresponding to a specific package (e.g., a package to which the IPTV receiver is subscribing) from a server, and receive the requested payload or segment.

Alternatively, the TCP/IP manager 608 filters SD&S information, received according to the multicast scheme, by using the target package information, so that only a payload or a segment corresponding to a specific package can be parsed and processed by the data decoder 603.

Fig. 26 is a block diagram of an IPTV receiver according to another exemplary embodiment, and illustrates a configuration of an IPTV receiver as functional blocks. Bold arrows depicted in Fig. 26 correspond to a data path, and normal arrows therein correspond to a control signal path.

A cable modem, DSL modem, etc 701 is an interface for connecting an ITF to an IP network on a physical level, and restores a digital signal by demodulating a signal transmitted through a physical medium.

An Ethernet NIC 702 restores the signal received through the physical interface into IP data, and an IP Network Stack 703 process each layer according to an IP Protocol stack.

Meanwhile, an XML Parser 704 parses an XML document in the received IP data, and a file handler 705 processes data, transmitted in the form of a file through a FLUTE or the like, in the received IP data.

An SI handler 706 processes a portion corresponding to IPTV service information, in the data received in the form of a file, and stores it in a storage 708. An EPG handler 707 processes a portion corresponding to IPTV EPG information, in the data received in the form of a file, and may store it in the storage 708.

The storage 708 stores a variety of data such as the SI, the EPG, and the like.

An SI decoder 709 obtains channel map information by receiving and analyzing the SI data from the storage 708, and an EPG Decoder 710 restores information required for EPG configuration by analyzing the EPG data stored in the storage 708.

An ITF operation controller 711 is a main controller controlling an operation of the ITF, such as channel change, EPG display, or the like.

A channel service manager 712 performs an operation such as a channel change or the like according to a user's input, and an application manager 713 may perform a application service such as EPG display or the like according to a consumer's input.

An MPEG-2 demultiplexer 714 may extract MPEG-2 transport stream data from a received IP datagram, and transmit the same to a corresponding module according to packet identification information (PID).

Also, an MPEG-2 PSI/PSIP parser 715 may extract PID of A/V data or PSI/PSIP data, including access information regarding a program element, from the MPEG-2 transport stream, and perform parsing thereon.

Meanwhile, an A/V decoder 716 decodes input audio and video data and transmits the decoded data to a display module 717, and the display module 717 may output decoded A/V data or an application.

Originally, the Segments may be used for delivery efficiency. However, this may mean that a receiver must receive all the information to construct channel map regardless of package preference.

By the use of the target package information, a hierarchical architecture to build package and broadcast discovery record for delivery is enabled.

This hierarchical architecture is achieved by adding a Package Attribute to each segment in the Service Provider Discovery Record.

Receiver can use this Package information to filter segments contained in multicast stream or request only the desirable segments in unicast manner according to the preference of package.

By doing so, receiver can generate channel map according to the preference of package without getting all the information. Receivers complying with earlier versions of the specification will ignore the newly added TargetPackage element, so easily introduced in a backward-compatible manner.

As set forth herein, according to an exemplary embodiment, service discovery information is segmented in units of packages, and target package information regarding segments is included in SP discovery information, so that an IPTV receiver can filter service information according to target package information, and then receive or process the same.

Thus, the amount of service information to be received or processed by the IPTV receiver is reduced, and this efficient processing of the service information decreases load of the receiver while reducing time it takes to access an IPTV service. Furthermore, a reduction in the amount of service information being received may save the consumption of a network bandwidth.

According to another exemplary embodiment, payloads or segments including service information are prioritized, thereby enhancing efficiency in information transfer and processing.

According to another exemplary embodiment, a device group is specified for payloads or segments including service information, so that the reception and processing of the service information may be limited to a receiver equipped with functions required for using a package or a service.

According to another exemplary embodiment, a specific function list is specified for payloads or segments including the service information, thereby filtering service information unavailable to an IPTV receiver.

The above-described method for IPTV service discover according the exemplary embodiments of the present invention can be written as computer programs and can be implemented in general-use computers that execute the programs using a computer readable recording medium. Examples of the computer readable recording medium include read-only memory (ROM), random-access memory (RAM), CD-ROMs, magnetic tapes, floppy disks, optical data storage devices, and carrier waves (such as data transmission through the Internet).

The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

It will be apparent to those skilled in the art that various modifications and variations can be made in the present invention. Thus, it is intended that the present invention covers the modifications and variations of this invention provided they come within the scope of the appended claims and their equivalents.

## Claims

1. A method for Internet Protocol Television (IPTV) service discovery, the method comprising:
collecting service provider discovery information (SP discovery information); and
collecting service discovery information by using the collected SP discovery information,
wherein the SP discovery information includes target package information regarding a segment obtained by dividing the service discovery information, and wherein the target package information includes identification information of a package to which the service discovery information included in the segment belongs, and
wherein the method further comprises filtering a plurality of segments including the service discovery information by using the target package information.

2. The method of claim 1, wherein the SP discovery information includes payload identification information indicating a type of the service discovery information, segment identification information regarding a plurality of segments into which the service discovery information is divided, and the target package information regarding the segments.

3. The method of claim 1, wherein the target package information includes type information regarding the target package.

4. The method of claim 1, wherein the service discovery information includes a broadcast discovery record divided into a plurality of segments,
wherein the plurality of segments include information regarding services belonging to specific packages, respectively.

5. The method of claim 4, wherein at least one of the plurality of segments includes information regarding services belonging to two or more packages.

6. The method of claim 1, wherein the service discovery information includes a package discovery record divided into a plurality of segments,
wherein the plurality of segments include information regarding specific packages, respectively.

7. The method of claim 1, wherein the filtering of the plurality of segments includes receiving only a segment belonging to a specific package among the plurality of segments upon request.

8. The method of claim 1, wherein the filtering of the plurality of segments includes parsing and processing only a segment belonging to a specific package among the plurality of segments.

9. An Internet Protocol Television (IPTV) receiver comprising:
a network interface for receiving service provider discovery information (SP discovery information) and receiving service discovery information divided into a plurality of segments by using the received SP discovery information;
a data decoder for obtaining service information by parsing the received service discovery information; and
a control unit for filtering the plurality of segments by using target package information included in the SP discovery information,
wherein the target package information includes identification information of a package to which the service discovery information included in the segment belongs.

10. The IPTV receiver of claim 9, wherein the target package information includes: type information regarding the target package.

11. The IPTV receiver of claim 9, wherein the service discovery information includes a broadcast record divided into a plurality of segments,
wherein the plurality of segments include services belonging to specific packages, respectively.

12. The IPTV receiver of claim 9, wherein the control unit controls the network interface to receive only a segment belonging to a specific package among the plurality of segments upon request.

13. The IPTV receiver of claim 9, wherein the control unit controls the data decoder to parse and process only a segment belonging to a specific package among the plurality of segments received through the network interface.

## Patentansprüche

1. Verfahren zur Internet Protocol Television (IPTV) Diensterkennung, wobei das Verfahren umfasst:
Sammeln von Dienstanbieter-Erkennungsinformation (SP-Erkennungsinformation) und
Sammeln von Dienst-Erkennungsinformation unter Verwendung der gesammelten SP-Erkennungsinformation,
wobei die SP-Erkennungsinformation Zielpaketinformation hinsichtlich eines durch Unterteilen der Dienst-Erkennungsinformation erhaltenen Segments enthält, wobei die Zielpaketinformation Identifizierungsinformation eines Pakets enthält, zu dem die in dem Segment enthaltene Dienst-Erkennungsinformation gehört,
wobei das Verfahren ferner das Filtern mehrerer die Dienst-Erkennungsinformation enthaltender Segmente unter Verwendung der Zielpaketinformation umfasst.

2. Verfahren nach Anspruch 1, wobei die SP-Erkennungsinformation Nutzdaten-Identifizierungsinformation, die einen Typ der Dienst-Erkennungsinformation angibt, Segment-Identifizierungsinformation hinsichtlich mehrerer Segmente, in welche die Dienst-Erkennungsinformation unterteilt ist, sowie die Zielpaketinformation bezüglich der Segmente enthält.

3. Verfahren nach Anspruch 1, wobei die Zielpaketinformation Typeninformation bezüglich des Zielpakets enthält.

4. Verfahren nach Anspruch 1, wobei die Dienst-Erkennungsinformation eine in mehrere Segmente unterteilte Broadcast-Erkennungsaufzeichnung enthält,
wobei die mehreren Segmente Information zu Diensten enthalten, welche zu spezifischen Paketen gehören.

5. Verfahren nach Anspruch 4, wobei mindestens eines der mehreren Segmente Information zu Diensten enthält, welche zu zwei oder mehr Paketen gehören.

6. Verfahren nach Anspruch 1, wobei die Dienst-Erkennungsinformation eine Paketerkennungsaufzeichnung enthält, die in mehrere Segmente unterteilt ist, wobei die mehreren Segmente jeweils Information bezüglich spezifischer Pakete enthalten.

7. Verfahren nach Anspruch 1, wobei das Filtern der mehreren Segmente den Empfang nur eines zu einem spezifischen Paket gehörenden Segments unter den mehreren Segmenten auf Anforderung hin umfasst.

8. Verfahren nach Anspruch 1, wobei das Filtern der mehreren Segmente das Parsing und die Verarbeitung nur eines zu einem spezifischen Paket gehörenden Segments unter den mehreren Segmenten umfasst.

9. Internet Protocol Television (IPTV) Empfänger mit:
einer Netzwerk-Schnittstelle zum Empfangen von Dienstanbieter-Erkennungsinformation (SP-Erkennungsinformation) und zum Empfangen von in mehrere Segmente unterteilter Dienst-Erkennungsinformation unter Verwendung der empfangenen SP-Erkennungsinformation,
einem Daten-Decodierer zum Erhalt von Dienstinformation durch Parsing der empfangenen Dienst-Erkennungsinformation und
einer Steuereinheit zum Filtern der mehreren Segmente unter Verwendung von in der SP-Erkennungsinformation enthaltener Zielpaketinformation,
wobei die Zielpaketinformation Identifizierungsinformation eines Pakets enthält, zu dem die in dem Segment enthaltene Dienst-Erkennungsinformation gehört.

10. IPTV-Empfänger nach Anspruch 9, wobei die Zielpaketinformation Typeninformation bezüglich des Zielpakets umfasst.

11. IPTV-Empfänger nach Anspruch 9, wobei die Dienst-Erkennungsinformation eine in mehrere Segmente unterteilte Broadcast-Aufzeichnung enthält, wobei die mehreren Segmente Dienste umfassen, welche zu spezifischen Paketen gehören.

12. IPTV-Empfänger nach Anspruch 9, wobei die Steuereinheit die Netzwerk-Schnittstelle steuert, um nur ein zu einem spezifischen Paket gehörendes Segment unter den mehreren Segmenten auf Anforderung hin zu empfangen.

13. IPTV-Empfänger nach Anspruch 9, wobei die Steuereinheit den Daten-Decodierer steuert, um das Parsing und die Verarbeitung nur eines zu einem spezifischen Paket gehörenden Segments unter den mehreren über die Netzwerk-Schnittstelle empfangenen Segmenten auszuführen.

## Revendications

1. Procédé de découverte de service de Télévision sur Protocole Internet (IPTV), le procédé comprenant :
la collecte d'une information de découverte de fournisseur de services (information de découverte SP) ; et
la collecte d'une information de découverte de service en utilisant l'information de découverte SP collectée,
dans lequel l'information de découverte SP inclut une information de groupe cible concernant un segment obtenu en divisant l'information de découverte de service, et dans lequel l'information de groupe cible inclut une information d'identification d'un groupe auquel l'information de découverte de service incluse dans le segment appartient, et
dans lequel le procédé comprend en outre le filtrage d'une pluralité de segments incluant l'information de découverte de service en utilisant l'information de groupe cible.

2. Procédé selon la revendication 1, dans lequel l'information de découverte SP inclut une information d'identification de données utiles indiquant un type de l'information de découverte de service, une information d'identification de segment concernant une pluralité de segments dans lesquels l'information de découverte de service est divisée, et l'information de groupe cible concernant les segments.

3. Procédé selon la revendication 1, dans lequel l'information de groupe cible inclut une information de type concernant le groupe cible.

4. Procédé selon la revendication 1, dans lequel l'information de découverte de service inclut un registre de découverte de diffusion divisé en une pluralité de segments,
dans lequel la pluralité de segments inclut une information concernant des services appartenant à des groupes spécifiques, respectivement.

5. Procédé selon la revendication 4, dans lequel au moins un de la pluralité de segments inclut une information concernant des services appartenant à deux groupes ou plus.

6. Procédé selon la revendication 1, dans lequel l'information de découverte de service inclut un registre de découverte de groupe divisé en une pluralité de segments,
dans lequel la pluralité de segments inclut une information concernant des groupes spécifiques, respectivement.

7. Procédé selon la revendication 1, dans lequel le filtrage de la pluralité de segments inclut la réception uniquement d'un segment appartenant à un groupe spécifique parmi la pluralité de segments à la demande.

8. Procédé selon la revendication 1, dans lequel le filtrage de la pluralité de segments inclut l'analyse syntaxique et le traitement uniquement d'un segment appartenant à un groupe spécifique parmi la pluralité de segments.

9. Récepteur de Télévision sur Protocole Internet (IPTV), comprenant :
une interface réseau pour recevoir une information de découverte de fournisseur de services (information de découverte SP) et recevoir une information de découverte de service divisée en une pluralité de segments en utilisant l'information de découverte SP reçue ;
un décodeur de données pour obtenir une information de service par analyse syntaxique de l'information de découverte de service reçue ; et
une unité de commande pour filtrer la pluralité de segments en utilisant une information de groupe cible incluse dans l'information de découverte SP,
dans lequel l'information de groupe cible inclut une information d'identification d'un groupe auquel l'information de découverte de service incluse dans le segment appartient.

10. Récepteur IPTV selon la revendication 9, dans lequel l'information de groupe cible inclut : une information de type concernant le groupe cible.

11. Récepteur IPTV selon la revendication 9, dans lequel l'information de découverte de service inclut un registre de diffusion divisé en une pluralité de segments,
dans lequel la pluralité de segments inclut des services appartenant à des groupes spécifiques, respectivement.

12. Récepteur IPTV selon la revendication 9, dans lequel l'unité de commande commande l'interface réseau pour recevoir uniquement un segment appartenant à un groupe spécifique parmi la pluralité de segments à la demande.

13. Récepteur IPTV selon la revendication 9, dans lequel l'unité de commande commande le décodeur de données pour analyser syntaxiquement et traiter uniquement un segment appartenant à un groupe spécifique parmi la pluralité de segments reçus par l'intermédiaire de l'interface réseau.
